# EUROPÄISCHE PATENTSCHRIFT

(11) **EP 1 037 360 B1**
(45) Veröffentlichungstag und Bekanntmachung des Hinweises auf die Patenterteilung: **14.05.2003**
(21) Anmeldenummer: 00810200.6
(22) Anmeldetag: 09.03.2000
(51) Int. Cl.: H02K 5/14

(54) **Elektromotor**
Electric Motor
Moteur électrique

(30) Priorität: 15.03.1999 DE 19911355
(43) Veröffentlichungstag der Anmeldung: 20.09.2000
(73) Patentinhaber: HILTI Aktiengesellschaft, 9494 Schaan (LI)
(72) Erfinder: Burger, Helmut, 82272 Moorenweis (DE); Fünfer, Josef, 86343 Königsbrunn (DE)
(74) Vertreter: Wildi, Roland

(56) Entgegenhaltungen:
- US-A- 4 355 253
- US-A- 4 677 329
- US-A- 5 642 008
- US-A- 5 773 907

## Beschreibung

Die Erfindung betrifft einen Elektromotor gemäss dem Oberbegriff des Patentanspruchs 1.

Ein Bohrgerät mit der Typenbezeichnung TE 5A der Fa. Hilti AG, FL-9494 Schaan, weist einen Elektromotor mit einem Ständer, einem Läufer, einem drehfest mit dem Läufer in Verbindung stehenden Stromwender und zwei Bürstenhaltern auf, in denen jeweils eine mit dem Stromwender zusammenwirkende Kohlbürste angeordnet ist. Beide Bürstenhalter sind auf Befestigungsabschnitten eines ringförmig ausgebildeten Verbindungselementes angeordnet, wobei der Abstand zwischen beiden Bürstenhaltem nur geringfügig grösser ist als der Aussendurchmesser des Stromwenders. Da die Kohlebürsten die einander zugewandten Endbereich der Bürstenhalter überragen, wenn der Bürstenhalter bzw. das Verbindungselement nicht montiert ist, müssen die Kohlebürsten bei der Montage der Bürstenhalter bzw. des Verbindungselementes mit einem geeigneten Werkzeug, beispielsweise einem flachen Schraubenzieher gegen die Kraft von mit den Kohlebürsten zusammenwirkenden Federn in den Bürstenhalter gedrückt werden, damit die Bürstenhalter über den Stromwender geschoben werden können.

Der Erfindung liegt die Aufgabe zugrunde, einen Elektromotor zu schaffen, bei dem beide Bürstenhalter mitsamt den Kohlebürsten ohne die Zuhilfenahme eines Werkzeuges schnell, einfach und sicher montiert werden können.

Die Lösung dieser Aufgabe erfolgt mit einem Elektromotor, welcher die im kennzeichnenden Abschnitt des Patentanspruchs 1 angeführten Merkmale aufweist.

Aufgrund der erfindungsgemässen elastischen Ausgestaltung des elastischen Verbindungsabschnittes ist es möglich, die beiden Bürstenhalter von Hand derart weit auseinander zu bewegen, dass die beiden Bürstenhalter auch trotz der aus den Bürstenhaltem ragenden Kohlebürsten über den Stromwender geschoben werden können. Mittels Befestigungspunkten, die an dem Befestigungsabschnitt angeordnet und die beispielsweise als parallel zur Längsachse des Läufers verlaufende Durchtrittsöffnungen ausgebildet sind, ist das gesamte Verbindungselement sicher und fest mit Hilfe von die Durchtrittsöffnungen durchsetzenden, in den Ständer eindrehbaren Befestigungselementen festlegbar.

Vorteilhafterweise ist der elastische Verbindungsabschnitt als U-förmiger Bügel ausgebildet, der von einer den Bürstenhaltern gegenüberliegenden Seite der Befestigungsabschnitte abragt. Durch die Ausgestaltung des elastischen Verbindungsabschnittes als beispielsweise dünnwandigen Bügel wird erreicht, dass beide Bürstenhalter besonders weit auseinanderbewegt werden können. Dies ist insbesondere dann von Vorteil, wenn aus Gründen der Zugänglichkeit eine Montage der Bürstenhalter in einer parallel zur Längsachse des Läufers verlaufenden Richtung erfolgen muss und dabei die Bürstenhalter über eine Lagerstelle am Ende des Läufers geschoben werden müssen, deren Aussendurchmesser grösser ist als der Aussendurchmesser des Stromwenders.

Damit der von einer Stromquelle zugeführte Strom und die in den Bürstenhaltern angeordneten Kohlebürsten schnell und einfach mit Hilfe von beispielsweise Flachsteckern an den Bürstenhaltern angeschlossen werden können, ragen vorzugsweise von der den Bürstenhaltern gegenüberliegenden Seite der Befestigungsabschnitte zwei einstückig mit den Bürstenhaltem in Verbindung stehende Anschlussfahnen auf.

Die Erfindung wird anhand einer Zeichnung, die ein Ausführungsbeispiel wiedergibt, näher erläutert.

Der erfindungsgemässe, nicht näher dargestellte Elektromotor weist einen Ständer 1, einen Läufer 2, einen drehfest mit dem Läufer 2 in Verbindung stehenden Stromwender 3, zwei mit dem Stromwender 3 zusammenwirkende Kohlebürsten 5 und zwei Bürstenhalter 4 auf. Beide Bürstenhalter 4 sind koaxial zueinander ausgerichtet, voneinander beabstandet und mit den von den Kohlebürsten überragten Endbereichen einander zugewandt an zwei plattenförmigen Befestigungsabschnitten 7 eines die beiden Bürstenhalter 4 miteinander verbindenden Verbindungselementes 6 angeordnet. Beide Befestigungsabschnitte 7 erstrecken sich in einer senkrecht zur Längsachse des Läufers 2 verlaufenden Richtung.

Jeder der beiden Befestigungsabschnitte 7 dient neben der Aufnahme der Bürstenhalter 4 auch der Festlegung des Verbindungselementes 6 an dem Ständer 1. Zur Festlegung der beiden Befestigungsabschnitte 7 an dem Ständer 1 weist jeder Befestigungsabschnitt 7 seitlich neben dem Bürstenhaltern 4 wenigstens einen Befestigungspunkt 13 in Form einer parallel zur Längsachse des Läufers 2 verlaufende Durchtrittsöffnung auf, die von einem in den Ständer 1 eindrehbaren, nicht dargestellten Befestigungselement durchsetzbar ist.

Zwischen den beiden Befestigungsabschnitten 7 erstreckt sich ein elastischer Verbindungsabschnitt 9 in Form eines Bügels, der von einer Seite der Befestigungsabschnitte 7 abragt, die von den Bürstenhaltern 4 abgewandt ist. Aufgrund dieses elastischen Verbindungsabschnittes 9 lassen sich die beiden Befestigungsabschnitte 7 mitsamt den Bürstenhaltern 4 und den Kohlebürsten 5 auseinanderbewegen, wenn diese nicht mit Hilfe der Befestigungselemente an dem Ständer 1 befestigt sind.

Beide Befestigungsabschnitte 7 sind von jeweils zwei Anschlussfahnen 8 durchsetzt und überragen die den Bürstenhaltern 4 gegenüberliegenden Seiten der Befestigungsabschnitte 7. Die beiden Anschlussfahnen 8 sind Teil des Bürstenhalters 4. Eine der beiden Anschlussfahnen 8 jedes Befestigungsabschnittes 7 trägt einen Flachstecker 11, an dem ein elektrisches Verbindungskabel 12 befestigt ist, das mit den in dem Bürstenhalter 4 angeordneten Kohlenbürsten 5 in Verbindung steht. Die weitere Anschlussfahne 8 ist mit dem Pol einer nicht dargestellten Gleichstromquelle in Verbindung bringbar.

Von jedem der beiden Bürstenhalter 4 ragt auf einer von den Befestigungsabschnitten 7 abgewandten Seite ein Trägerelement 14 ab, das der Aufnahme einer mit der Kohlebürste 5 zusammenwirkenden Feder 10 in Form einer Schlingfeder zusammenwirkt. Mit Hilfe der Feder 10 werden die Kohlebürsten 5 gegen den Stromwender 3 gedrückt.

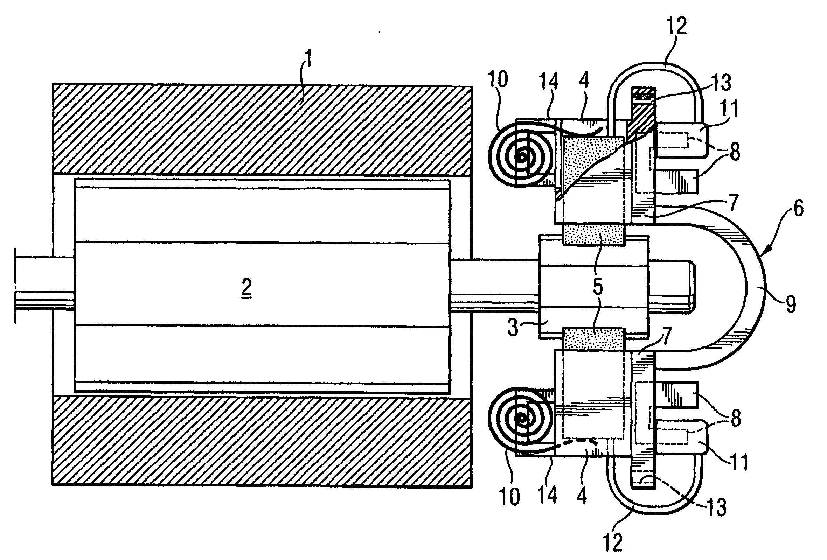

## Patentansprüche

1. Elektromotor mit einem Ständer (1), einem Läufer (2), einem mit dem Läufer (2) drehfest in Verbindung stehenden Stromwender (3), zwei Bürstenhaltern (4) und zwei in den Bürstenhaltem (4) angeordneten, mit dem Stromwender (3) zusammenwirkenden Kohlebürsten (5), wobei beide Bürstenhalter (4) koaxial zueinander ausgerichtet, voneinander beabstandet und mit den von den Kohlebürsten überragten Endbereichen einander zugewandt an zwei Befestigungsabschnitten (7) eines Verbindungselementes (6) angeordnet sind, das lösbar mit dem Ständer in Verbindung steht und aus einem nicht stromleitenden Material gefertigt ist, **dadurch gekennzeichnet, dass** beide Befestigungsabschnitte (7) Befestigungspunkte (13) zur Festlegung an dem Ständer (1) aufweisen und dass der sich zwischen den Befestigungsabschnitten (7) erstreckende Verbindungsabschnitt (9) des Verriegelungselementes (6) elastisch ausgebildet ist.

2. Motor nach Anspruch 1, **dadurch gekennzeichnet, dass** der elastische Verbindungsabschnitt (9) als U-förmiger Bügel ausgebildet ist, der von einer den Bürstenhaltern (4) gegenüberliegenden Seite der Befestigungsabschnitte (7) abragt.

3. Motor nach Anspruch 2, **dadurch gekennzeichnet, dass** von der den Bürstenhaltern (4) gegenüberliegenden Seite der Befestigungsabschnitte (7) zwei einstückig mit den Bürstenhaltern (4) in Verbindung stehende elektrische Anschlussfahnen (8) abragen.

## Claims

1. Electric motor comprising a stator (1), a rotor (2), a commutator (3) which communicates with the rotor (2) in a manner locked against rotation, two brush holders (4) and two carbon brushes (5) which are arranged in the brush holders (4) and cooperate with the commutator (3), the two brush holders (4) being orientated coaxially with one another, spaced apart from each other, and arranged, with the end regions overhung by the carbon brushes positioned facing one another, on two fixing portions (7) of a connecting element (6) which communicates in a releasable manner with the stator and is made from a material that is not electroconductive,
**characterised in that** the two fixing portions (7) incorporate fixing points (13) for locating them on the stator (1) and that the connecting portion (9) of the locking element (6) which extends between the fixing portions (7) is a flexible construction.

2. Motor according to claim 1, **characterised in that** the flexible connecting portion (9) is constructed in the form of U-shaped bracket which juts out from one side of the fixing portions (7) that is situated opposite the brush holders (4).

3. Motor according to claim 2, **characterised in that** two electrical terminal lugs (8) which communicate integrally with the brush holders (4) jut out from the side of the fixing portions (7) that is situated opposite the brush holders (4).

## Revendications

1. Moteur électrique comportant un stator (1), un rotor (2), un collecteur (3) qui est en liaison solidaire en rotation avec le rotor (2), deux porte-balais (4) et deux balais en charbon (5) disposés dans les porte-balais (4) et coopérant avec le collecteur (3), les deux porte-balais (4) étant orientés coaxialement l'un à l'autre, espacés l'un de l'autre et disposés, tournés l'un vers l'autre par les extrémités terminales dépassant des balais en charbon, sur deux portions de fixation (7) d'un élément de liaison (6), lequel est en liaison séparable avec le stator et est réalisé dans une matière non conductrice de l'électricité, **caractérisé en ce que** les deux portions de fixation (7) comportent des points de fixation (13) pour la fixation sur le stator (1), et **en ce que** la portion de liaison (9), s'étendant entre les portions de fixation (7), de l'élément de verrouillage (6), est réalisée élastique.

2. Moteur selon la revendication 1, **caractérisé en ce que** la portion de liaison (9) élastique est réalisée sous la forme d'un étrier en U qui dépasse d'un côté, opposé aux porte-balais (4), des portions de fixation (7).

3. Moteur selon la revendication 2, **caractérisé en ce que** deux cosses de connexion électrique (8), en liaison d'un seul tenant avec les porte-balais (4), dépassent du côté, opposé aux porte-balais (4), des portions de fixation (7).
